# EUROPÄISCHE PATENTANMELDUNG

(11) **EP 1 352 909 A1**
(43) Veröffentlichungstag der Anmeldung: **15.10.2003**
(21) Anmeldenummer: 03006819.1
(22) Anmeldetag: 27.03.2003
(51) Int. Cl.: C07F 9/54

(54) **Lagerung von Phosphoniumphenolat-Katalysatoren und deren Verwendung als Umesterungskatalysatoren**

(30) Priorität: 09.04.2002 DE 10215498
(71) Anmelder: BAYER AG, 51368 Leverkusen (DE)
(72) Erfinder: Moethrath, Melanie Dr., 40227 Düsseldorf (DE); Hucks, Uwe, 46519 Alpen (DE); Kratschmer, Silke Dr., 60488 Frankfurt (DE); Rechner, Johann Dr., 47906 Kempen (DE)

(57) **Zusammenfassung**

Die Anmeldung betrifft die Lagerung von Phosphoniumphenolat-Katalysatoren und deren Verwendung als Umesterungskatalysatoren, insbesondere für die lösungsmittelfreie Herstellung von thermoplastischen Polycarbonaten.

## Beschreibung

Die Anmeldung betrifft die Lagerung von Phosphoniumphenolat-Katalysatoren und die Verwendung erfindungsgemäß gelagerter Phosphoniumphenolate als Umesterungskatalysatoren, insbesondere für die lösungsmittelfreie Herstellung von thermoplastischen Polycarbonaten.

Die Herstellung von Phosphoniumphenolaten ist aus DE 197 27 351 C1 und WO 01 46100 A bekannt. Darin werden Verfahren zur Synthese hochreiner Phosphoniumphenolate, diese fallen als Phenoladdukte in kristalliner Form an, beschrieben. Die so erhaltenen Phenoladdukte der Phosphoniumphenolate werden u.a. als Umesterungskatalysatoren in Schmelzeumesterungsverfahren zur Herstellung von Polycarbonat eingesetzt. Für den Einsatz in diesen Schmelzeumesterungsverfahren spielt die Reinheit der Katalysatoren eine entscheidende Rolle, da Verunreinigungen zu Aktivitätsschwankungen, Verfärbungen oder Nebenreaktionen im Umesterungsprozess führen können. In der Regel ist die Herstellung der Phenoladdukte der Phosphoniumphenolate jedoch apparatetechnisch bzw. physikalisch nicht mit dem Umesterungsprozess verbunden. Das macht eine Lagerung des Katalysators bis zum Einsatz notwendig. Die Reinheit der Katalysatoren und damit die Qualität des zu erhaltenden Endproduktes kann sich jedoch abhängig von den Lagerungsbedingungen verschlechtern. Dies muss häufig durch den Zusatz von alkalischen Cokatalysatoren, wie beispielsweise Natriumphenolat, ausgeglichen werden. Zu dieser Problematik findet sich im Stand der Technik jedoch kein Hinweis, wie ihr zu begegnen wäre.

Es stellt sich somit, ausgehend vom Stand der Technik die Aufgabe, ein Verfahren zur Lagerung von Phosphoniumphenolaten zu finden, welches eine konstante Qualität des Katalysators gewährleistet.

Überraschenderweise wurde nun gefunden das die Lagerung möglich ist, wenn bestimmte Parameter eingehalten werden.

Gegenstand der vorliegenden Erfindung ist daher die Lagerung von Phenoladdukten von Phosphoniumphenolaten als kristalliner Feststoff unter Einhaltung einer bestimmten relativen Luftfeuchtigkeit, bestimmter Temperaturen und in geschlossenen Gebinden. Diese ermöglicht die Lagerung bis zu einem Zeitraum von fünf Jahren bei nahezu unveränderter Qualität. Ebenfalls Gegenstand der vorliegenden Erfindung ist daher auch die Verwendung solch gelagerter Verbindungen als Katalysatoren zur Herstellung von Polycarbonat nach dem Schmelzeumesterungsverfahren, insbesondere auch ohne zusätzliche Verwendung von alkalischen Cokatalysatoren, wie beispielsweise Natriumphenolat.

Bevorzugt werden Phenoladdukte der Phosphoniumphenolate der Formel (I) gelagert 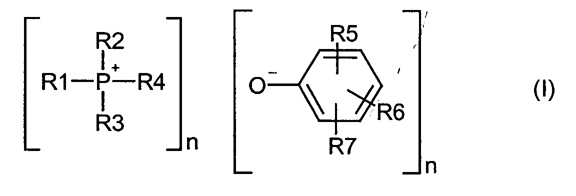 wobei
- R₁ bis R₄: gleich oder verschieden, jeweils für einen C₁-C₁₂-Alkyl, C₅-C₆-Cycloalkyl-, C₇-C₁₂-Arylalkyl - oder C₆-C₁₄-Aryl-Rest, bevorzugt für einen C₆-C₁₄-Aryl-Rest,
besonders bevorzugt für einen C₆-Aryl-Rest, insbesondere einen Phenylrest stehen,
und
- R₅ bis R₇: unabhängig voneinander für H, C₁-C₁₂-Alkyl, C₅-C₆-Cycloalkyl, C₇-C₁₂-Arylallcyl und C₆-C₁₄-Aryl stehen;
besonders bevorzugt stehen R₅ bis R₇ für Wasserstoff
- n: für die Zahl 1 oder 2 steht,
besonders bevorzugt für 1,
wobei für n = 2 R₄ für einen C₂-C₁₂-Alkylenrest steht.

Am meisten bevorzugt steht Formel (I) für Tetraphenylphosphoniumphenolat.

Erfindungsgemäß werden die Phenoladdukte der Phosphoniumphenolate, bevorzugt die Phenoladdukte von Tetraphenylphosphoniumphenolat, als kristalliner Feststoff, bevorzugt als rieselfähiger kristalliner Feststoff, gelagert.

Erfindungsgemäß werden die Phenoladdukte der Phosphoniumphenolate, bevorzugt die Phenoladdukte von Tetraphenylphosphoniumphenolat, in geschlossenen Metall-, Kunststoff- oder Pappverpackungen gelagert. Bevorzugt werden sie in Stahl- oder Kunststoffgebinden mit PE-Inlinern, die unter Luft abgepackt, verschlossen und unter Stickstoffatmosphäre abgedichtet werden, gelagert. Besonders bevorzugt werden sie in Stahl- oder Kunststoffgebinden mit PE-Inlinern, die unter Luft abgepackt, verschlossen und unter Stickstoffatmosphäre abgedichtet werden, von der Größe gelagert, dass sie als Einheit zum Ansetzen von Dosierlösungen benutzt werden können ohne aufgespalten werden zu müssen.

Erfindungsgemäß werden die Phenoladdukte der Phosphoniumphenolate, bevorzugt die Phenoladdukte von Tetraphenylphosphoniumphenolat, bei Temperaturen von -30 bis 50°C, bevorzugt -20 bis 40°C und besonders bevorzugt 0 bis 35°C gelagert.

Erfindungsgemäß werden die Phenoladdukte der Phosphoniumphenolate, bevorzugt die Phenoladdukte von Tetraphenylphosphoniumphenolat, bei einer relativen Luftfeuchtigkeit von 30 bis 70 %, bevorzugt 40 bis 65 %, gelagert.

Erfindungsgemäß lassen sich die Phenoladdukte der Phosphoniumphenolate, bevorzugt die Phenoladdukte von Tetraphenylphosphoniumphenolat, 0 bis 5 Jahre, bevorzugt 0 bis 3 Jahre und besonders bevorzugt 0 bis 1,5 Jahre lagern.

Die Verwendung der erfindungsgemäß gelagerten Phenoladdukte der Phosphoniumphenolate, bevorzugt der Phenoladdukte von Tetraphenylphosphoniumphenolat, als Katalysator zur Herstellung von Polycarbonaten kann in an sich bekannter Weise erfolgen (siehe beispielsweise US-A 3 442 854). Gemäß dem dort offenbarten Schmelzeumesterungsverfahren werden beispielsweise aus aromatischen Diphenolen, Kohlensäurediarylestern und gegebenenfalls Verzweigern und/oder Monophenolen aromatische Polycarbonate hergestellt.

Bevorzugt erfolgt die Verwendung der erfindungsgemäß gelagerten Phenoladdukte der Phosphoniumphenolate, bevorzugt der Phenoladdukte von Tetraphenylphosphoniumphenolat, als Katalysator in dem in der DE-A 10 114 804 und in dem in DE-A 10 119 851 beschriebenen Verfahren.

Die erfindungsgemäß gelagerten Phenoladdukte der Phosphoniumphenolate, bevorzugt die Phenoladdukte von Tetraphenylphosphoniumphenolat, können als Umesterungs-Katalysatoren in Mengen von 10⁻¹ mol bis 10⁻⁸ mol, vorzugsweise in Mengen von 10⁻³ mol bis 10⁻⁷ mol, pro mol Diphenol eingesetzt werden.

Weitere Einzelheiten des Schmelzeumesterungverfahrens sind in der Literatur beschrieben (siehe beispielsweise Hermann Schnell, Chemistry and Physics of Polycarbonates, Polymer Reviews, Vol. 9, 1964, Seiten 44 bis 51, DE-B 1 031 512, US-A 3 002 272, US-A 3 022 272, US-A 5 340 905 und US-A 5 399 659, DE-A 10 119 851 und DE-A 10 114 804).

Die mit den erfindungsgemäß gelagerten Phenoladdukten der Phosphoniumphenolate, bevorzugt der Phenoladdukte von Tetraphenylphosphoniumphenolat, hergestellten thermoplastischen Polycarbonate sind lösungsmittelfrei und mit heller Eigenfarbe ausgestattet.

Die mit den erfindungsgemäß gelagerten Phenoladdukten der Phosphoniumphenolate, bevorzugt der Phenoladdukte von Tetraphenylphosphoniumphenolat, hergestellten thermoplastischen Polycarbonate entsprechen bevorzugt der Formel (II) 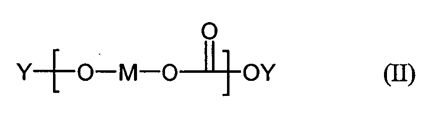 worin M Ar oder eine Fehlstruktur A, B, C und/oder D sein kann,
worin die Fehlstruktur A 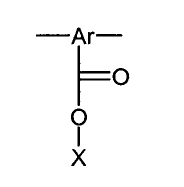 einen Gehalt von 800 ppm
bevorzugt von 750 ppm
besonders bevorzugt von 500 ppm
nicht überschreitet
worin die Fehlstruktur B 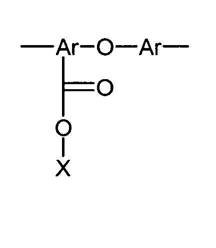 einen Gehalt von 350 ppm
bevorzugt von 250 ppm
besonders bevorzugt von 70 ppm
nicht überschreitet
worin die Fehlstruktur C 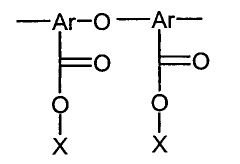 einen Gehalt von 200 ppm
bevorzugt von 150 ppm
besonders bevorzugt von 60 ppm
nicht überschreitet
worin die Fehlstruktur D 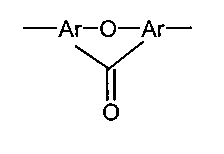 einen Gehalt von 750 ppm
bevorzugt von 300 ppm
besonders bevorzugt von 150 ppm nicht überschreitet
worin Y H oder 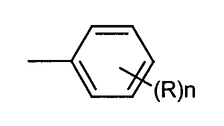 wobei R gleich oder verschieden H, C₁-C₂₀ Alkyl, C₆H₅ und C(CH₃)₂C₆H₅ sein kann, bedeutet, und n für 0, 1 oder 2 steht,
wobei X Y oder -(MOCOO)Y bedeutet, und M und Y wie oben beschrieben bedeuten,
wobei Ar einen aromatischen Rest mit 6 bis 30 C-Atomen darstellt, der einen oder mehrere aromatische Kerne enthalten kann, substituiert sein kann und aliphatische oder cycloaliphatische Reste bzw. Alkylaryle oder Heteroatome als Brückenglieder enthalten kann,
bevorzugt stellt Ar eine Verbindung dar, die durch Formel (III) dargestellt wird, 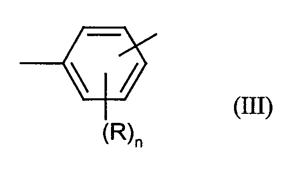 oder eine Verbindung, die durch Formel (IV) dargestellt wird, 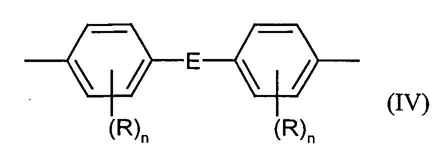 wobei
- E: C₁-C₈-Alkyliden oder C₅-C₁₂-Cycloalkyliden, S, SO₂ oder eine Einfachbindung, R ein substituiertes oder unsubstituiertes Phenyl, Methyl, Propyl, Ethyl, Butyl, Cl oder Br ist und n für 0, 1 oder 2 steht,
besonders bevorzugt stellt Ar die Verbindungen gemäß Formel (IV) dar.

Die Summe aller Fehlstrukturen A bis D sollte 1.000 ppm, bevorzugt 700 ppm, besonders bevorzugt 550 ppm nicht überschreiten. Der Begriff ppm bezieht sich hier auf das Gewichtsverhältnis von Fehlstrukturen zu Polycarbonate, bestimmt durch Totalhydrolyse und anschließende Abtrennung der "Fehlstrukturen" durch HPLC.

### Beispiele

Die folgenden Beispiele sollen die Erfindung illustrieren ohne sie jedoch einzuschränken.

Zur Identifikation von Tetraphenylphosphoniumphenolat wird ein ³¹P-NMR-Spektrum aufgenommen. Die Substanz wird dazu in Deuterochloroform gelöst und vermessen.

Der Gehalt an Tetraphenylphosphoniumkationen und Phenol/Phenolat wird mittels ¹³C-NMR bestimmt. Dazu wird ein Spektrum aufgenommen, die Signale von Tetraphenylphosphoniumkationen und Phenol/Phenolat werden integriert und auf ihre Molprozente normiert auf 100 % angegeben.

Der Wassergehalt nach Karl-Fischer wird nach ISO 760 (Determination of Water - Karl Fischer Method, 1st ed., 1978-12-01) bestimmt.

Die Farbzahl wurde als Differenz der Extinktion bei 420 nm und 700 nm in Dichlormethan bei einer Konzentration von 2,4 g/50 ml und einer Schichtdicke von 10 cm ermittelt.

Die relative Luftfeuchtigkeit wurde mit Hilfe eines Haarhygrometers bestimmt.

Die relative Lösungsviskosität wurde in Dichlormethan bei einer Konzentration von 5 g/l bei 25°C bestimmt.

Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

Der Gehalt an Fehlstrukturen A bis D im Polycarbonat wird nach Totalverseifung durch HPLC bestimmt. Dafür wird das Polycarbonat mit Natriummethylat durch Kochen verseift, anschließend angesäuert, filtriert und zur Trockne eingeengt. Der Rückstand wird in Acetonitril gelöst und per HPLC detektiert.

### A. Herstellung des Phosphoniumphenolats:

Nach WO 01 46100 A wird Tetraphenylphosphoniumphenolat als Phenoladdukt hergestellt und sofort nach der Synthese analysiert.

In einem 2-1-Rundkolben mit Rührer, Thermometer und Tropftrichter werden 376 g (4,0 mol) Phenol, 800 ml VE-Wasser, 335,44 g (0,8 mol) Tetraphenylphosphoniumbromid und 640 g Isobutanol vorgelegt und bei 20°C bis 25°C gerührt. Innerhalb von circa 5 Minuten werden 79 g (0,97 mol) 49 %ige Natronlauge zugetropft, der pH-Wert wird auf einen Bereich von 9,5 bis 11,0 eingestellt. Anschließend wird 0,5 h bei 45°C gerührt. Nach der Phasentrennung wird die untere wässrige Phase abgelassen und die organische Phase dreimal mit VE-Wasser gewaschen, das Waschwasser als schwere Phase wird jeweils unten abgelassen. Anschließend wird die organische Phase unter Rühren auf Raumtemperatur abgekühlt. Dabei kristallisiert das Produkt aus. Nach mindestens 4 h Kristallisationszeit wird das Produkt abgesaugt. Das Filtrat wird nach NMR-Analyse auf den Gehalt an Phenol, Isobutanol und Tetraphenylphosphoniumphenolat wieder der Reaktion zugeführt. Der kristalline Rückstand wird mit 2-Propanol nachgewaschen, dann bei 100°C im Wasserstrahlvakuum getrocknet.

Die analytische Zusammensetzung ist in Tabelle 1 aufgeführt.

**Tabelle 1**

| **Produkt A** | |
|---|---|
| **Parameter** | **Analysenwerte** |
| TPP-Phenolat-Gehalt | 66,3 Gew. % |
| Phenolgehalt | 33,6 Gew. % |
| Wassergehalt | < 0,06 % |
| Farbzahl | 6,6 |

### B. Beispiel:

Der gemäß A hergestellte Katalysator wird in einem Stahlgebinde mit PE-Inliner unter Luft abgepackt, unter Stickstoffbeschleierung dicht verschlossen und bei einer relativen Luftfeuchtigkeit von 55 % und einer Temperatur von 20 bis 25°C über einen Zeitraum von einem Jahr gelagert.

Die analytische Zusammensetzung ist in Tabelle 2 aufgeführt.

**Tabelle 2**

| **Beispiel** | |
|---|---|
| **Parameter** | **Analysenwerte** |
| TPP-Phenolat-Gehalt | 66,3 Gew. % |
| Phenolgehalt | 33,6 Gew. % |
| Wassergehalt | < 0,06 % |
| Farbzahl | 6,5 |

### C. Vergleichsbeispiele:

### Vergleichsbeispiel 1

Der gemäß A hergestellte Katalysator wird unter Luft in ein PE-Gefäß gefüllt und drei Wochen bei 25°C bei einer relativen Luftfeuchtigkeit von 90 % unter Luft in dem verschlossenen PE-Gefäß gelagert.

Die analytische Zusammensetzung ist in Tabelle 3 aufgeführt.

**Tabelle 3**

| **Vergleichsbeispiel 1** | |
|---|---|
| **Parameter** | **Analysenwerte** |
| TPP-Phenolat-Gehalt | 66,2 Gew. % |
| Phenolgehalt | 33,6 Gew. % |
| Wassergehalt | 0,18 % |
| Farbzahl | 6,9 |

### Vergleichsbeispiel 2

Der gemäß A hergestellte Katalysator wird unter Luft in ein offenes PE-Gefäß gefüllt und drei Wochen offen bei 25°C unter Luftkontakt gelagert.

Die analytische Zusammensetzung ist in Tabelle 4 aufgeführt.

**Tabelle 4**

| **Vergleichsbeispiel 2** | |
|---|---|
| **Parameter** | **Analysenwerte** |
| TPP-Phenolat-Gehalt | 66,1 Gew. % |
| Phenolgehalt | 33,7 Gew. % |
| Wassergehalt | 0,07 % |
| Farbzahl | 7,5 |

Im ³¹P-NMR ist ebenfalls ein Peak im Verschiebungsbereich, der für Phosphinoxide typisch ist, zu erkennen.

### Vergleichsbeispiel 3

Der gemäß A hergestellte Katalysator wird unter Luft in ein offenes Glasgefäß gefüllt, verschlossen und drei Wochen bei 90°C unter Luftkontakt gelagert.

Die analytische Zusammensetzung ist in Tabelle 4 aufgeführt.

**Tabelle 5**

| **Vergleichsbeispiel 3** | |
|---|---|
| **Parameter** | **Analysenwerte** |
| TPP-Phenolat-Gehalt | 66,3 Gew. % |
| Phenolgehalt | 33,6 Gew. % |
| Wassergehalt | 0,03 % |
| Farbzahl | 20,0 |

### D. Anwendungsbeispiele:

### Verwendungsbeispiele B1 bis B5

Die Phenoladdukte der Tetraphenylphosphoniumphenolate der vorangehenden Beispielen werden wie folgt zur Aufkondensation von Polycarbonat eingesetzt.

In einem 500 ml Dreihalskolben mit Rührer, Innenthermometer und Vigreuxkolonne (30 cm, verspiegelt) mit Brücke werden 45,66 g (0,2 mol) Bisphenol A, 46,27 g (0,216 mol) Diphenylcarbonat und 0,0055 g (8 x 10⁻⁴ mol %) der Phenoladdukte der Tetraphenylphosphoniumphenolate aus den vorangegangenen Beispielen bezogen auf Bisphenol A eingewogen. Die Apparatur wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 30 Minuten abdestilliert. Nun wird die Temperatur auf 235°C erhöht und 10 Minuten das entstehende Phenol abdestilliert. Dann wird innerhalb von 10 Minuten das Vakuum auf 60 mbar und gleichzeitig die Temperatur auf 300°C eingestellt. Nach wiederum 10 Minuten wird das Vakuum auf 0,5 mbar reduziert und weitere 30 Minuten gerührt.

Die Ergebnisse sind in Tabelle 6 zusammengefasst.

**Tabelle 6**

| **Anwendungs- beispiel** | **Katalysator** | **Relative Lösungs- viskosität** | **% phenolische OH Gruppen** | **Farb- zahl** |
|---|---|---|---|---|
| B1 | A (Frisch-Katalysator) | 1,215 | 0,033 | 0,23 |
| B2 | C. Vergleichsbeispiel 1 | 1,214 | 0,049 | 0,33 |
| B3 | C. Vergleichsbeispiel 2 | 1,232 | 0,046 | 0,36 |
| B4 | C. Vergleichsbeispiel 3 | 1,228 | 0,048 | 0,31 |
| B5 | B. Beispiel | 1,220 | 0,031 | 0,21 |

### Verwendungsbeispiel B7

Die Qualität des gemäß A hergestellten und gemäß B. Beispiel gelagerten Phenoladdukts des Tetraphenylphosphoniumphenolats wird ebenfalls im Anlagenmaßstab getestet.

Aus einer Vorlage werden 9000 kg/h Schmelzegemisch, bestehend aus 4600 kg Diphenylcarbonat/h (21473 mol/h) und 4400 kg Bisphenol A/h (19273 mol/h), unter Zusetzen von 0,2628 kg des gemäß A hergestellten und gemäß B.Beispiel gelagerten Phenoladdukts des Tetraphenylphosphoniumphenolats/h (0,771 mol/h) gelöst in 1,87kg Phenol/h durch einen Wärmetauscher gepumpt, auf 190°C erwärmt und durch eine Verweilkolonne bei 12000 mbar und 190°C geführt. Die mittlere Verweilzeit beträgt 45 Minuten.

Die Schmelze wird dann über ein Entspannungsventil in einen unter 200 mbar stehenden Abscheider geleitet. Die abfließende Schmelze wird in einem, ebenfalls unter 200 mbar stehenden, Fallfilmverdampfer wieder auf 190°C erwärmt und in einer Vorlage aufgefangen. Nach einer Verweilzeit von 20 Minuten wird die Schmelze in die nächsten drei, gleichartig aufgebauten Stufen gepumpt. Die Bedingungen in der 2./3./4. Stufe sind 100/75/60 mbar; 220/255/270°C und 20/10/10 Minuten. Das entstandene Oligomere hat eine rel. Viskosität von 1,068. Alle Brüden werden über Druckregelungen in eine unter Vakuum stehende Kolonne geführt und als Kondensate abgeleitet.

Das Oligomer wird in einem sich anschließenden Korbreaktor bei 280°C und 7,0 mbar bei einer Verweilzeit von 45 Minuten zu einem höhermolekularen Oligomeren aufkondensiert. Die rel. Viskosität beträgt 1,134. Die Brüden werden kondensiert.

Das Oligomere wird in einem weiteren Korbreaktor bei 295°C und 1,3 mbar auf eine rel. Viskosität von 1,278 aufkondensiert. Als mittlere Verweilzeit werden 130 Minuten ermittelt. Die Brüden werden hinter bzw. in der Vakuumanlage kondensiert.

Die Gesamtverweilzeit beträgt 274 Minuten.

In dem Polycarbonat werden folgende Verzweigergehalte gemessen: Struktur A: 378 ppm; Struktur B: 7 ppm; Struktur C: 23 ppm; Struktur D: 99 ppm.

Die Farbzahl des Polycarbonats beträgt 0,19.

### Verwendungsbeispiel B8

Die Qualität des gemäß A hergestellten und gemäß C. Vergleichsbeispiel 1 gelagerten Phenoladdukts des Tetraphenylphosphoniumphenolats wird ebenfalls im Anlagenmaßstab getestet. Um Aktivitätsschwankungen des Katalysators in diesem großen Maßstab zu vermeiden, muss in geringen Mengen Natriumphenolat als Co-Katalsator zugesetzt werden.

Aus einer Vorlage werden 10630 kg/h Schmelzegemisch, bestehend aus 5700 kg Diphenylcarbonat/h (23667 mol/h) und 4930 kg Bisphenol A/h (21595 mol/h), unter Zusetzen von 0,2945 kg des gemäß A hergestellten und gemäß Vergleichsbeispiel 1 gelagerten Phenoladdukts des Tetraphenylphosphoniumphenolats/h (0,864 mol/h) und 17 ppb Natrium/h, zugegeben als Natriumphenolat, gelöst in 2,10 kg Phenol/h durch einen Wärmetauscher gepumpt, auf 190°C erwärmt und durch eine Verweilkolonne bei 12000 mbar und 190°C geführt. Die mittlere Verweilzeit beträgt 45 Minuten.

Die Schmelze wird dann über ein Entspannungsventil in einen unter 200 mbar stehenden Abscheider geleitet. Die abfließende Schmelze wird in einem, ebenfalls unter 200 mbar stehenden, Fallfilmverdampfer wieder auf 190°C erwärmt und in einer Vorlage aufgefangen. Nach einer Verweilzeit von 20 Minuten wird die Schmelze in die nächsten drei, gleichartig aufgebauten Stufen gepumpt. Die Bedingungen in der 2./3./4. Stufe sind 100/75/60 mbar; 220/255/270°C und 20/10/10 Minuten. Das entstandene Oligomere hat eine rel. Viskosität von 1,068. Alle Brüden werden über Druckregelungen in eine unter Vakuum stehende Kolonne geführt und als Kondensate abgeleitet.

Das Oligomer wird in einem sich anschließenden Korbreaktor bei 275°C und 7,2 mbar bei einer Verweilzeit von 45 Minuten zu einem höhermolekularen Oligomeren aufkondensiert. Die rel. Viskosität beträgt 1,134. Die Brüden werden kondensiert.

Das Oligomere wird in einem weiteren Korbreaktor bei 297°C und 1,5 mbar auf eine rel. Viskosität von 1,293 aufkondensiert. Als mittlere Verweilzeit werden 130 Minuten ermittelt. Die Brüden werden hinter bzw. in der Vakuumanlage kondensiert.

Die Gesamtverweilzeit beträgt 300 Minuten.

In dem Polycarbonat werden folgende Verzweigergehalte gemessen: Struktur A: 509 ppm; Struktur B: 15 ppm; Struktur C: 35 ppm; Struktur D: 103 ppm.

Die Farbzahl des Polycarbonats beträgt 0,24.

Durch die notwendige Zugabe von Natriumphenolat als Co-Katalysator enthält das hergestellte Polycarbonat höhere Verzweigergehalte. Es besitzt ebenfalls eine schlechtere Eigenfarbe als das nach Verwendungsbeispiel B7 hergestellte Polycarbonat.

Die Beispiele belegen klar die überraschende Überlegenheit der erfindungsgemäßen Lagerung der Phenoladdukte der Phosphoniumphenolate, bevorzugt der Phenoladdukte von Tetraphenylphosphoniumphenolat, und deren Verwendung zur Herstellung von Polycarbonaten, welches zu Polycarbonaten führt, welche eine deutlich überlegene Farbzahl aufweisen, während die anderen Eigenschaften vergleichbar bleiben.

Im Anlagenmaßstab kann aufgrund der erfindungsgemäßen Lagerung der Phenoladdukte der Phosphoniumphenolate, bevorzugt der Phenoladdukte von Tetraphenylphosphoniumphenolat, bei der Herstellung von Polycarbonat nach dem Schmelzeumesterungsverfahren überraschend auf den Zusatz eines alkalischen Co-Katalysators verzichtet werden. Es ist somit klar zu erkennen, dass der Gegenstand der vorliegenden Anmeldung auf erfinderischer Tätigkeit beruht.

## Patentansprüche

1. Verfahren zur Lagerung von Phenoladdukten von Phosphoniumphenolaten, **dadurch gekennzeichnet, dass** sie als kristalliner Feststoff bei einer relativen Luftfeuchtigkeit von 30 bis 70 % bei Temperaturen von -30 bis 50°C, in geschlossenen Gebinden gelagert werden.

2. Verwendung des gemäß Anspruch 1 gelagerten Phosphoniumphenolats als Katalysator zur Herstellung von Polycarbonat nach dem Schmelzumesterungsverfahren.

3. Verfahren zur Herstellung von Polycarbonat nach dem Schmelzumesterungsverfahren, **dadurch gekennzeichnet, dass** als Katalysator Phosphoniumphenolate eingesetzt werden, welche zuvor gemäß Anspruch 1 gelagert wurden.

4. Verfahren gemäß Anspruch 3, **dadurch gekennzeichnet, dass** kein zusätzlicher alkalischer Cokatalysator eingesetzt wird.
